# EUROPEAN PATENT APPLICATION

(11) **EP 1 308 115 A1**
(43) Date of publication of application: **07.05.2003**
(21) Application number: 02257362.0
(22) Date of filing: 23.10.2002
(51) Int. Cl.: A47J 31/34

(54) **Beverage extracting apparatus**

(30) Priority: 30.10.2001 JP 2001332936
(71) Applicant: Sanden Corporation, Isesaki-shi, Gunma 372-8502 (JP)
(72) Inventor: Nagasawa, Takashi, c/o Sanden Corporation, Gunma 372-8502 (JP)
(74) Representative: Haley, Stephen

(57) **Abstract**

A beverage extracting apparatus for a vending machine is capable of extracting both a foamy beverage extracted under a high pressure and a less foamy beverage extracted under a low pressure using one apparatus. A hot-water-supply-side flow pipe (5) for causing hot water into an extracting cylinder (1) is provided with a first flow path (5a) having a low flow resistance and a second flow path (5b) having a high flow resistance. By opening and closing an electromagnetic valve (5c) in the first flow path (5a), a different flow resistance is given to the hot water supplied into the extracting cylinder (1). Therefore, espresso coffee can be extracted by decreasing the flow resistance of hot water supplied into the extracting cylinder (1) and thereby increasing an internal pressure of the extracting cylinder (1), and regular coffee can be extracted by increasing the flow resistance and thereby decreasing the internal pressure of the extracting cylinder (1).

## Description

The present invention relates to a beverage extracting apparatus for a vending machine in which a beverage is extracted from a raw material such as coffee powder or the like and is poured into a cup, whereby the beverage is sold.

Conventionally, as a beverage extracting apparatus of this kind, there is known an apparatus having an extracting cylinder whose upper and lower ends are open, and upper and lower pistons inserted to the upper and lower end sides of the extracting cylinder, in which a raw material is interposed between the pistons inserted in the extracting cylinder, hot water is discharged from the end face of the upper piston to the raw material, and a beverage extracted from the raw material is caused to flow out through the end face of the lower piston, as described, for example, in Japanese Patent Examined Publication No. S50-38994.

In the above-described beverage extracting apparatus, an interior of the extracting cylinder can be closed and be under a high pressure by the pistons inserted in the extracting cylinder, so that this apparatus is suited to a foamy beverage extracted under a high pressure, such as espresso coffee.

However, such an apparatus is unsuited to a less foamy beverage extracted under a low pressure, such as regular coffee, so that the apparatus cannot extract both espresso coffee and regular coffee.

The present invention has been achieved to solve the above problems, and accordingly an object thereof is to provide a beverage extracting apparatus for a vending machine, which is capable of extracting both a foamy beverage extracted under a high pressure and a less foamy beverage extracted under a low pressure using one apparatus.

To attain the above object, the present invention provides a beverage extracting apparatus for extracting a beverage from an extracting cylinder via a filtering member by supplying hot water into the extracting cylinder into which a raw material is charged and by pressurizing the interior of the extracting cylinder, wherein the apparatus includes a hot-water-supply-side flow path capable of giving a different flow resistance to the hot water supplied into the extracting cylinder; and a changing mechanism for arbitrarily changing the flow resistance of the hot-water-supply-side flow path.

Thereupon, a foamy beverage such as espresso coffee is extracted by decreasing the flow resistance of hot water supplied into the extracting cylinder and thereby increasing the internal pressure of the extracting cylinder. Also, a less foamy beverage such as regular coffee is extracted by increasing the flow resistance of hot water supplied into the extracting cylinder and thereby decreasing the internal pressure of the extracting cylinder. Therefore, this apparatus is very advantageous to a beverage vending machine which is required to sell many kinds of beverages.

Also, in the present invention, the apparatus further includes an extraction-side flow path for giving a predetermined flow resistance to the beverage extracted from the extracting cylinder.

Thereupon, since a beverage extraction pressure is produced in the extracting cylinder, if the pressure applied by the supply of hot water is constant, the extraction pressure of the extracting cylinder can be made a desired value exactly regardless of the kind, grain size, etc. of raw material. Therefore, the transparency of regular coffee and the amount of foam generated in espresso coffee can always be made constant, by which the beverage quality can be upgraded.

In this case, a changing mechanism for changing the flow resistance of the extraction-side flow path is provided, and for example, if the inflow-side flow resistance of the extracting cylinder is decreased and the outflow-side flow resistance is increased, the pressure in the extracting cylinder can be made high. Also, if the inflow-side flow resistance of the extracting cylinder is increased and the outflow-side flow resistance is decreased, the pressure in the extracting cylinder can be made low. Thereby, the pressure difference in the extracting cylinder between the case where a beverage is extracted under a high pressure and the case where a beverage is extracted under a low pressure can be increased, so that espresso coffee and regular coffee can surely be produced separately.

**In the Drawings**;
FIG. 1 is a schematic view of a beverage extracting apparatus in accordance with a first embodiment of the present invention;
FIG. 2 is a schematic view of the beverage extracting apparatus;
FIGS. 3A and 3B are explanatory views illustrating an operation of the beverage extracting apparatus;
FIGS. 4A and 4B are explanatory views illustrating the operation of the beverage extracting apparatus;
FIG. 5 is a schematic view of a beverage extracting apparatus in accordance with a second embodiment of the present invention;
FIG. 6 is a schematic view of a beverage extracting apparatus in accordance with a third embodiment of the present invention; and
FIG. 7 is a schematic view of the beverage extracting apparatus.

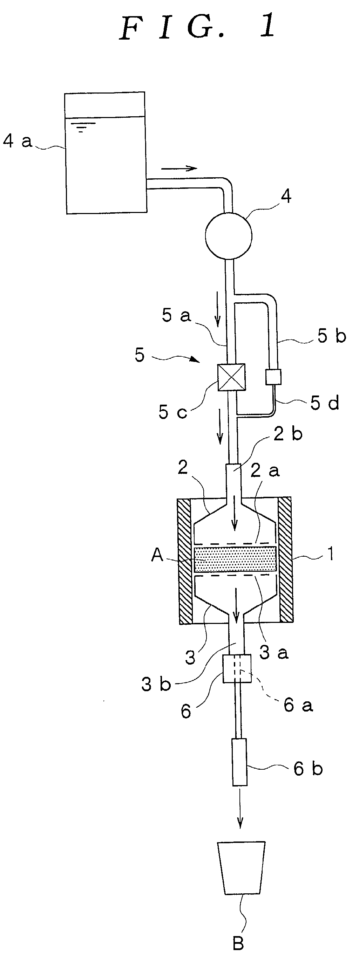

FIGS. 1 to 4 show a first embodiment of the present invention.

A beverage extracting apparatus shown in these drawings includes an extracting cylinder 1 whose upper and lower ends are open, an upper piston 2 inserted from an upside into the extracting cylinder 1, a lower piston 3 inserted from a downside into the extracting cylinder 1, a pump 4 for supplying hot water into the extracting cylinder 1, a hot-water-supply-side flow pipe 5 constituting a hot-water-supply-side flow path capable of giving a different flow resistance to hot water supplied from the pump 4 to the extracting cylinder 1, and an extraction-side flow pipe 6 constituting an extraction-side flow path which gives a predetermined flow resistance to the beverage extracted from the extracting cylinder 1.

The extracting cylinder 1, which is formed into a cylindrical shape extending vertically, is arranged at a predetermined position in a vertical direction of an apparatus body, not shown.

The upper piston 2 is configured so as to be moved vertically by a driving mechanism, not shown, and the interior thereof is formed into a hollow shape so that hot water can flow therethrough. The lower end face of the upper piston 2 is formed with a large number of holes 2a through which hot water is discharged, and the upper end portion thereof is provided with an inflow port 2b through which hot water flows into the upper piston 2.

The lower piston 3 is configured so as to be moved vertically by a driving mechanism, not shown, and the interior thereof is formed into a hollow shape so that an extracted beverage can flow therethrough. The upper end face of the lower piston 3 is formed with a large number of holes 3a through which an extracted beverage is sucked, and the lower end portion thereof is provided with an outflow port 3b through which hot water flows out of the lower piston 3. In this case, a portion in which the holes 3a of the lower piston 3 are provided serves as a filtering member.

The pump 4, which has a publicly known construction of, for example, an electromagnetic pump, is configured so as to feed hot water, which is generated in a hot-water supply tank 4a, to the hot-water-supply-side flow pipe 5.

The hot-water-supply-side flow pipe 5, which consists of a first flow path 5a and a second flow path 5b provided in parallel with each other, is disposed between the pump 4 and the upper piston 2. The first flow path 5a is provided with an electromagnetic valve 5c serving as a flow path opening/closing valve. One end of the second flow path 5b is connected to the upstream side of the electromagnetic valve 5c in the first flow path 5a, and the other end thereof is connected to the downstream side of the electromagnetic valve 5c. Also, the other end side of the second flow path 5b consists of a small-diameter pipe 5d having a smaller inside diameter than one end side thereof. This small-diameter pipe 5d makes the flow resistance of the second flow path 5b higher than that of the first flow path 5a.

The extraction-side flow pipe 6, which is provided at the lower end of the lower piston 3, causes to flow the beverage in the lower piston 3 via a flow path 6a having a small inside diameter, and discharges the beverage through a nozzle 6b.

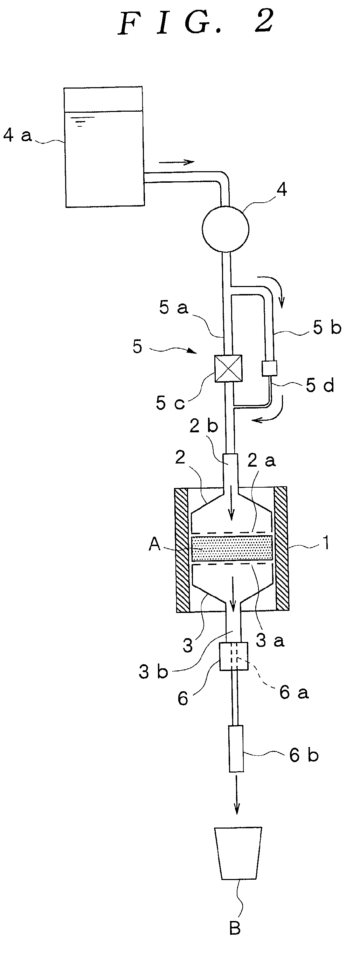

The beverage extracting apparatus constructed as described above is mounted in a beverage vending machine that sells espresso coffee and regular coffee. When espresso coffee is selected, hot water is supplied into the extracting cylinder 1 via the first flow path 5a of the hot-water-supply-side flow pipe 5 as shown in FIG. 1, and when regular coffee is selected, hot water is supplied into the extracting cylinder 1 via the second flow path 5b as shown in FIG. 2.

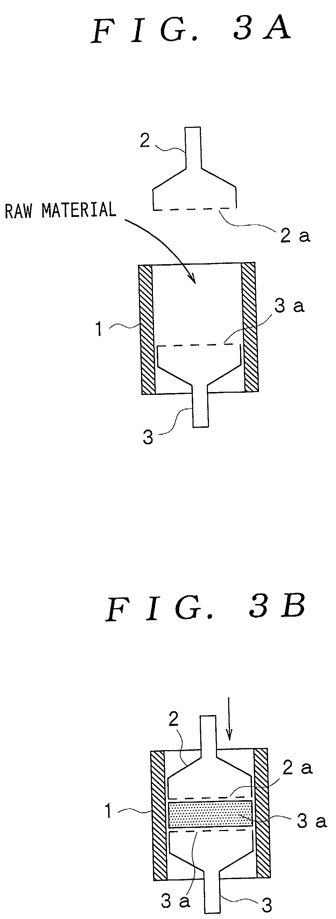

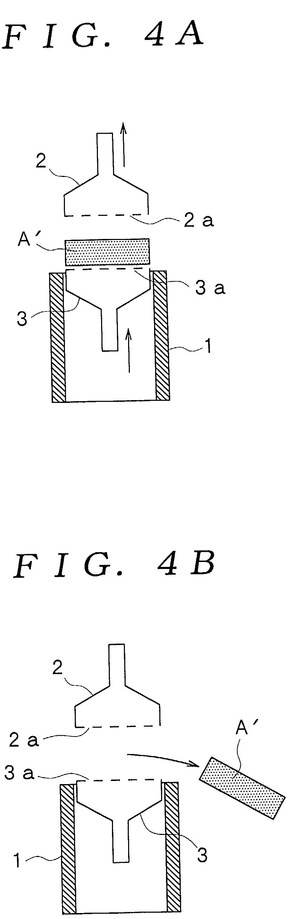

That is, after coffee powder (milled beans) is charged as a raw material A into the extracting cylinder 1 in which the lower piston 3 is inserted as shown in FIG. 3A, the upper piston 2 is inserted into the extracting cylinder 1 as shown in FIG. 3B. Next, hot water is discharged from the upper piston 2 to the raw material A. The interior of the extracting cylinder 1 (between the pistons 2 and 3) is pressurized, and hence the beverage extracted from the raw material A flows into the lower piston 3, and is poured into a cup B through the extraction-side flow pipe 6. After the extraction of beverage is finished, the pistons 2 and 3 are moved to a position above the extracting cylinder 1 as shown in FIG. 4A, and raw material grounds A' on the lower piston 3 are discharged as shown in FIG. 4B.

At the time of the above-described beverage extraction, in the case where espresso coffee is selected, the electromagnetic valve 5c in the hot-water-supply-side flow pipe 5 is opened, whereby hot water discharged from the pump 4 is supplied into the extracting cylinder 1 through the first flow path 5a. In this case, since the first flow path 5a has a lower flow resistance than the second flow path 5b, the pressure in the extracting cylinder 1 at the time of extraction is high, and thus a beverage containing much fine foam (espresso coffee) is extracted. Although the second flow path 5b is kept open, most of hot water flows in the first flow path 5a because the second flow path 5b has a higher flow resistance than the first flow path 5a.

In the case where regular coffee is selected, the electromagnetic valve 5c in the hot-water-supply-side flow pipe 5 is closed, whereby hot water discharged from the pump 4 is supplied into the extracting cylinder 1 through the second flow path 5b. In this case, since the second flow path 5b has a higher flow resistance than that of the first flow path 5a, the pressure in the extracting cylinder 1 at the time of extraction is low, and thus a beverage containing less foam than espresso coffee (regular coffee) is extracted.

At the time when the pump 4 operates, that is, at an early stage of beverage extraction time, the internal pressure of the extracting cylinder 1 is increased by the flow resistance of the holes 3a of the lower piston 3. When the beverage having passed through the holes 3a reaches the flow path 6a of the extraction-side flow pipe 6, however, the internal pressure on the side of the piston 3 is increased because the flow path 6a exerts a beverage flow resistance. Thereby, the internal pressure of the extracting cylinder 1 is further increased beyond the pressure increasing action due to the flow resistance of the holes 3a, whereby a beverage extraction pressure is produced in the extracting cylinder 1. Therefore, the flow resistance of the holes 3a contributes less to the increase in internal pressure of the extracting cylinder 1, so that the beverage extraction pressure is produced substantially by the flow resistance of the extraction-side flow pipe 6. Thus, the holes 3a of the lower piston 3 mainly perform the filtering function.

As described above, according to the beverage extracting apparatus of this embodiment, the hot-water-supply-side flow pipe 5, in which hot water to be supplied into the extracting cylinder 1 flows, is provided with the first flow path 5a having a low flow resistance and the second flow path 5b having a high flow resistance, and by opening and closing the electromagnetic valve 5c in the first flow path 5a, a different flow resistance is given to the hot water supplied into the extracting cylinder 1. Therefore, espresso coffee can be extracted by decreasing the flow resistance of hot water supplied into the extracting cylinder 1 and thereby increasing the internal pressure of the extracting cylinder 1, and regular coffee can be extracted by increasing the flow resistance and thereby decreasing the internal pressure of the extracting cylinder 1. Thereupon, either beverage of espresso coffee and regular coffee can be extracted using one beverage extracting apparatus, which is very advantageous to a beverage vending machine which is required to sell many kinds of beverages.

Also, the extraction-side flow pipe 6, in which the beverage extracted from the extracting cylinder 1 flows, is provided with the flow path 6a having a small inside diameter, and hence a flow resistance is given to the beverage by the flow path 6a to produce a beverage extraction pressure in the extracting cylinder 1. Therefore, if the pressure applied by the supply of hot water is constant, the extraction pressure of the extracting cylinder 1 can be made a desired value exactly regardless of the kind, grain size, etc. of raw material, so that the transparency of regular coffee and the amount of foam generated in espresso coffee can always be made constant.

Further, the hot-water-supply-side flow pipe 5 is composed of the first and second flow paths 5a and 5b having a flow resistance different from each other, and the flow resistance is changed by opening and closing the first flow path 5a using the electromagnetic valve 5c. Therefore, the apparatus can be constructed at a low cost due to a simple structure, which is very advantageous in reducing the cost.

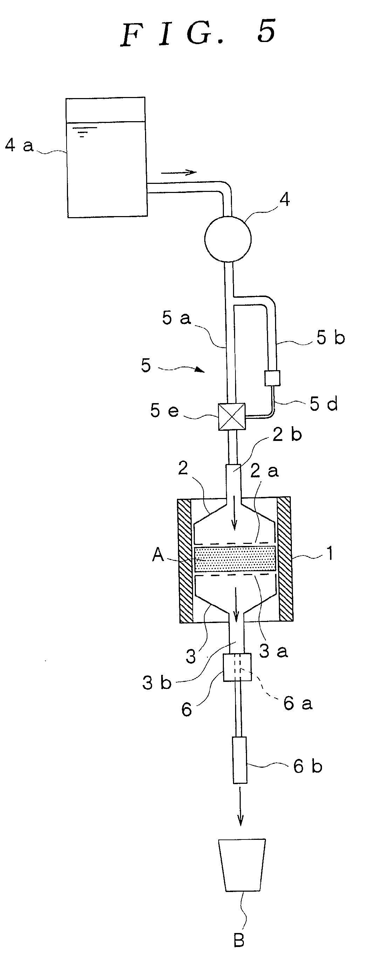

FIG. 5 shows a second embodiment in accordance with the present invention. In this drawing, the same reference numerals are applied to the same elements as those in the above-described embodiment. In the above-described embodiment, there has been shown an apparatus in which a different flow resistance is given to hot water flowing in the hot-water-supply-side flow pipe 5 by opening and closing the electromagnetic valve 5c in the first flow path 5a of the hot-water-supply-side flow pipe 5. In this embodiment, however, in place of the electromagnetic valve 5c, a three-way valve 5e serving as a flow path switching valve is provided in a junction point of the flow paths 5a and 5b.

That is, by causing the first flow path 5a to communicate with the lower piston 3 by the three-way valve 5e, hot water supplied into the extracting cylinder 1 flows in the first flow path 5a only, so that the internal pressure of the extracting cylinder 1 at the time of extraction can be increased. Also, by causing the second flow path 5b to communicate with the lower piston 3 by the three-way valve 5e, hot water supplied into the extracting cylinder 1 flows in the second flow path 5b only, so that the internal pressure of the extracting cylinder 1 at the time of extraction can be decreased.

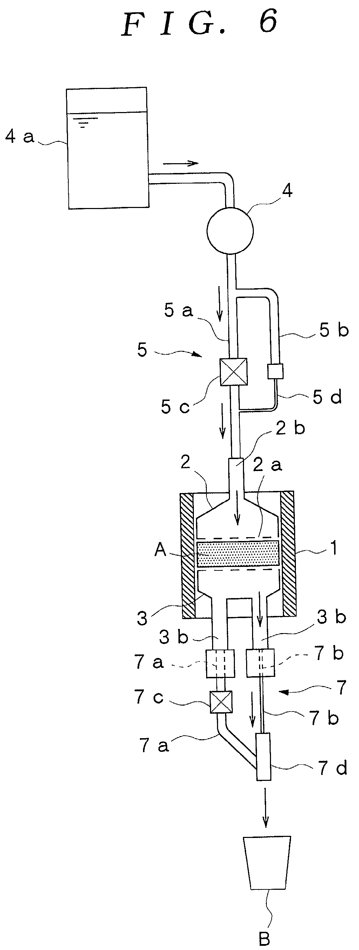

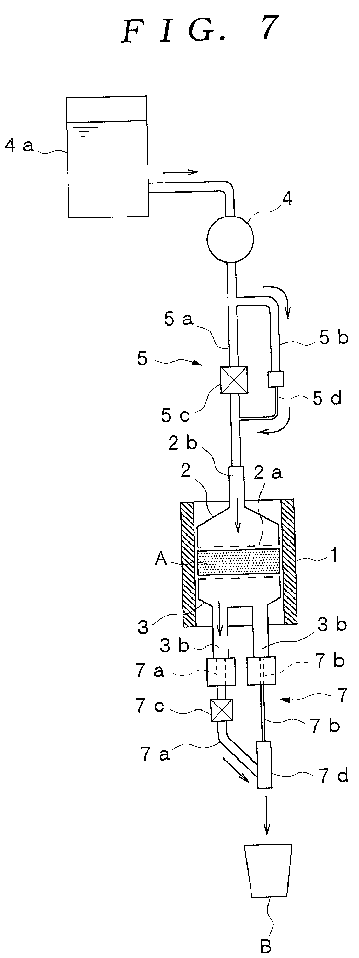

FIGS. 6 and 7 show a third embodiment in accordance with the present invention. In this drawing, the same reference numerals are applied to the same elements as those in the first embodiment. In the first embodiment, there has been shown an apparatus in which the lower piston 3 is provided with a single outflow port 3b. In this embodiment, however, the lower piston 3 is provided with a total of two outflow ports 3b, and an extraction-side flow pipe 7 is provided on the downstream side of each of the outflow ports 3b.

The extraction-side flow pipe 7 consists of a first flow path 7a and a second flow path 7b provided in parallel with each other, and in the first flow path 7a, an electromagnetic valve 7c serving as a flow path opening/closing valve is provided. One end of the second flow path 7b is connected to the upstream side of the electromagnetic valve 7c in the first flow path 7a, and the other end thereof is connected so as to join with a nozzle 7d provided on the downstream side of the electromagnetic valve 7c. The second flow path 7b is formed so as to have an inside diameter smaller than that of the first flow path 7a and thus have a higher flow resistance than that of the first flow path 7a.

In this embodiment, when espresso coffee is selected at the time of beverage extraction, the electromagnetic valve 5c in the hot-water-supply-side flow pipe 5 is opened, and hence hot water discharged from the pump 4 is supplied into the extracting cylinder 1 through the first flow path 5a as shown in FIG. 6. In this case, the electromagnetic valve 7c in the extraction-side flow pipe 7 is closed, and the hot water extracted from the extracting cylinder 1 passes through the second flow path 7b and is discharged from the nozzle 7d. Thereby, the flow resistance on the inflow side of the extracting cylinder 1 is made low, and the flow resistance on the outflow side thereof is made high, so that the pressure in the extracting cylinder 1 at the time of extraction increases, whereby espresso coffee is extracted.

When regular coffee is selected, the electromagnetic valve 5c in the hot-water-supply-side flow pipe 5 is closed, and hence hot water discharged from the pump 4 is supplied into the extracting cylinder 1 through the second flow path 5b as shown in FIG. 7. On the other hand, the electromagnetic valve 7c in the extraction-side flow pipe 7 is opened, and the hot water extracted from the extracting cylinder 1 passes through the first flow path 7a and is discharged from the nozzle 7d. Thereby, the flow resistance on the inflow side of the extracting cylinder 1 is made high, and the flow resistance on the outflow side thereof is made low, so that the pressure in the extracting cylinder 1 at the time of extraction decreases, whereby regular coffee is extracted. Although the second flow path 7b is kept open, most of beverage flows in the first flow path 7a because the second flow path 7b has a higher flow resistance than the first flow path 7a.

As described above, according to this embodiment, the hot-water-supply-side flow pipe 5 and the extraction-side flow pipe 7, whose flow resistance is variable, are provided on the inflow side and the outflow side of the extracting cylinder 1, respectively, and the configuration is such that when espresso coffee is extracted, the flow resistance on the inflow side of the extracting cylinder 1 is made low and the flow resistance on the outflow side thereof is made high, and when regular coffee is extracted, the flow resistance on the inflow side of the extracting cylinder 1 is made high and the flow resistance on the outflow side thereof is made low. Therefore, the pressure difference in the extracting cylinder 1 between the case where espresso coffee is extracted and the case where regular coffee is extracted can be increased, so that espresso coffee and regular coffee can surely be produced separately.

Although the electromagnetic valves 5c and 7c are used in the hot-water-supply-side flow pipe 5 and the extraction-side flow pipe 7, respectively, in this embodiment, a three-way valve can be used as in the second embodiment.

## Claims

1. A beverage extracting apparatus for extracting a beverage from an extracting cylinder (1) via a filtering member (3a) by supplying hot water into said extracting cylinder (1) into which a raw material (A) is charged and by pressurizing the interior of said extracting cylinder (1), **characterized in that**:
a hot-water-supply-side flow path (5) capable of giving a different flow resistance to the hot water supplied into said extracting cylinder (1); and
a changing mechanism (5c, 5e) for arbitrarily changing the flow resistance of said hot-water-supply-side flow path (5).

2. The beverage extracting apparatus according to claim 1, **characterized in that** an extraction-side flow path (6) for giving a predetermined flow resistance to the beverage extracted from said extracting cylinder (1).

3. The beverage extracting apparatus according to claim 1, **characterized in that**:
an extraction-side flow path (7) capable of giving a different flow resistance to the beverage extracted from said extracting cylinder (1); and
a changing mechanism (7c) for arbitrarily changing the flow resistance of said extraction-side flow path (7).

4. The beverage extracting apparatus according to claim 3, **characterized in that**:
at least one of said hot-water-supply-side flow path (5) and said extraction-side flow path (7) is formed by a first flow path (5a, 7a) having a low flow resistance and a second flow path (5b, 7b) having a high flow resistance; and
said changing mechanism is formed by a flow path opening/closing valve (5c, 7c) for opening and closing said first flow path (5a,7a).

5. The beverage extracting apparatus according to claim 3, **characterized in that**:
at least one of said hot-water-supply-side flow path (5) and said extraction-side flow path (7) is formed by a first flow path (5a, 7a) having a low flow resistance and a second flow path (5b, 7b) having a high flow resistance; and
said changing mechanism is formed by a flow path switching valve (5e) which causes either one of said first flow path (5a, 7a) and said second flow path (5b, 7b) to communicate with the extracting cylinder side.
